# FASCICULE DE BREVET EUROPEEN

(11) **EP 4 360 339 B1**
(45) Date de publication et mention de la délivrance du brevet: **26.03.2025**
(21) Numéro de dépôt: 22735209.3
(22) Date de dépôt: 09.06.2022
(51) Int. Cl.: H04W 4/021, H04W 4/80, H04W 12/64, G06Q 20/28, G06Q 20/30, G06Q 20/32, G06Q 20/18, G07B 15/06

(54) **PROCÉDÉ DE COMMUNICATION SANS CONTACT ENTRE UN OBJET COMMUNICANT ET UN DISPOSITIF DE COMMUNICATION**
VERFAHREN ZUR KONTAKTLOSEN KOMMUNIKATION ZWISCHEN EINEM KOMMUNIZIERENDEN OBJEKT UND EINER KOMMUNIKATIONSVORRICHTUNG
METHOD FOR CONTACTLESS COMMUNICATION BETWEEN A COMMUNICATING OBJECT AND A COMMUNICATION DEVICE

(30) Priorité: 23.06.2021 FR 2106702
(43) Date de publication de la demande: 01.05.2024
(73) Titulaire: Orange, 92130 Issy-les-Moulineaux (FR)
(72) Inventeur: LE HUEROU, Emmanuel, 92326 CHÂTILLON CEDEX (FR); TOUTAIN, François, 92326 CHÂTILLON CEDEX (FR); PONTIGGIA, Michael, 92326 CHÂTILLON CEDEX (FR)
(86) Numéro de dépôt international: PCT/FR2022/051101
(87) Numéro de publication internationale: WO 2022/269156

(56) Documents cités:
- JP-A- 2007 004 224
- US-A1- 2019 124 468

## Description

### Domaine de l'invention

L'invention concerne les communications sans contact, c'est-à-dire sans fil, pour la transmission de données entre un objet communicant et un dispositif de communication situé à proximité radio de cet objet. Plus précisément, l'invention porte sur un système pour effectuer des transactions de type bancaire, contrôle d'accès, commande de biens ou de services, etc... entre cet objet communicant tel que par exemple un véhicule connecté, un smartphone (« téléphone intelligent »), une montre connectée, et un dispositif de communication tel que par exemple un lecteur, un point de paiement, un portillon.

### Art antérieur

Les communications en champ proche, usuellement connues sous le sigle « NFC » (pour « Near Field Communication »), basées principalement sur la norme ISO (International Standard Organisation) 14443, utilisent des technologies sans fil pour permettre un échange d'informations entre deux périphériques éloignés d'une courte distance, typiquement inférieure à dix centimètres. Les communications de ce type offrent de nombreuses applications, par exemple dans les domaines du paiement ou du transport. Le récepteur en champ proche reçoit un message de la part de l'émetteur en champ proche. Un tel message peut correspondre, dans le contexte précité, à la validation d'une transaction telle que par exemple l'échange d'un ticket (de spectacle, de transport, etc.), un paiement, le lancement d'un service personnalisé sur un ordinateur, un téléviseur, l'accès à un local, etc.

Actuellement, un utilisateur a la possibilité d'utiliser un objet connecté pour mettre en œuvre le type de transactions précitées au lieu d'utiliser classiquement une carte bancaire, un badge de transport, une carte d'accès à un local, etc...A cet effet, l'utilisateur approche l'objet connecté, par exemple sa montre connectée, à quelques centimètres de l'antenne du dispositif de communication NFC. Suite à ce rapprochement, le dispositif de communication NFC reçoit le signal en provenance de l'objet connecté. Le signal reçu est démodulé et transmis à un équipement adapté pour effectuer des traitements, en l'espèce pour mettre en œuvre la transaction (paiement, ouverture de porte, etc.).

Compte tenu du fait qu'une telle transaction est à l'initiative de l'utilisateur, et que c'est l'utilisateur lui-même qui décide de rapprocher l'objet connecté du dispositif de communication qu'il a sélectionné pour établir une communication, il y a peu de chances que l'appairage entre l'objet connecté et le dispositif de communication rencontre un problème, en ce sens que l'objet connecté saura reconnaître ce dispositif de communication parmi d'autres pour initier un appairage à bon escient.

Il n'empêche que l'utilisateur est quand même obligé de présenter l'objet connecté près du dispositif de communication pour initier l'appairage préalable à la communication entre l'objet connecté et le dispositif de communication. Une telle manipulation n'est pas toujours commode, notamment pour des personnes à mobilité réduite, des personnes âgées, des enfants, etc.

En ce qui concerne un autre objet connecté, typiquement un véhicule connecté, certaines communications sans contact entre le véhicule connecté et un dispositif de communication sont déjà mises en œuvre actuellement. Dans le cas de l'accès à un parking par exemple, la simple lecture par le dispositif de communication de la plaque d'immatriculation ou d'un badge spécifique apposé sur le pare-brise suffit à donner l'accès du véhicule au parking. Il en est de même pour l'accès automatique du véhicule à un péage à l'aide d'un badge spécifique. Bien que ce type de communications sans contact apporte un confort d'usage à l'utilisateur qui n'a plus besoin de s'arrêter à l'entrée du parking pour prendre un ticket de stationnement ou encore de marquer l'arrêt au péage pour payer, ce contexte de communication sans contact présente un certain nombre d'inconvénients. L'utilisateur est en effet systématiquement obligé de réaliser une démarche auprès d'un fournisseur de service (gestionnaire de parkings, société d'autoroute), en créant un compte, éventuellement en payant un abonnement sur une période donné pour bénéficier du service. Cette démarche nécessite la fourniture de données personnelles propres à l'utilisateur, dont ce dernier ne sait pas vraiment comment elles seront exploitées par le fournisseur de services. En outre, dans l'exemple de l'accès à un péage, l'utilisateur est contraint de sa propre initiative à sélectionner de lui-même la barrière de péage adéquate, c'est-à-dire celle réservée aux abonnés, à y approcher son véhicule, à l'appairer avec un dispositif de communication situé à proximité de la barrière, afin de pouvoir passer ce péage automatiquement.

Les documents JP 2007004334 A et US 2019/124468 A1 décrivent des procédés pour établir une communication entre un véhicule et une barrière de péage sur la base d'informations de localisation.

### Objet et résumé de l'invention

Un des buts de l'invention est de remédier à des inconvénients de l'état de la technique précité.

A cet effet, un objet de la présente invention concerne un procédé de communication sans contact entre un objet communicant et un dispositif de communication pour la mise en œuvre d'une transaction relative à la fourniture d'un bien ou d'un service. Un tel procédé est remarquable en ce qu'il comprend, au niveau de l'objet communicant situé dans une zone où la transaction est mise en œuvre, une exécution de manière autonome de ce qui suit :
- activer la réception d'au moins une requête d'appairage en provenance d'un ou de plusieurs dispositifs d'appairage associés à la zone, quand l'objet communicant a déterminé au moins une information de contexte d'utilisation de l'objet communicant ainsi qu'une localisation associée à au moins un dispositif d'appairage qui est associé à la zone,
- quand un dispositif d'appairage identifié dans ladite au moins une requête d'appairage reçue correspond audit au moins un dispositif d'appairage associé à la zone et que la localisation associée audit au moins un dispositif d'appairage correspond à la localisation de l'objet communicant dans la zone, s'appairer avec le dispositif de communication, ledit dispositif de communication étant associé au dispositif d'appairage identifié.

L'invention permet avantageusement à un objet apte à communiquer sans contact avec un dispositif de communication, autrement dit un objet connecté, tel que par exemple un véhicule connecté, une montre connectée, un badge ou une carte de transport connecté(e), etc., de s'appairer avec un dispositif de communication, de façon autonome, adéquate et sécurisée, en vue de communiquer avec ce dispositif pour par exemple valider une transaction avec ce dispositif ou exécuter la commande d'un bien ou d'un service auprès de ce dispositif. L'objet communicant selon l'invention exécute de manière autonome l'appairage, en ce sens qu'aucune intervention ou manipulation de l'objet par un utilisateur n'est nécessaire, ce qui allie souplesse et confort d'usage pour cet utilisateur. L'appairage, et donc la communication consécutive à cet appairage, sont rendus sécurisés du fait que l'objet communicant qui parvient dans la zone où la transaction avec le dispositif de communication est mise en œuvre :
- se met à l'écoute des requêtes d'appairage en provenance d'un ou de plusieurs dispositifs d'appairage qui a/ont été associé(s) préalablement à cette zone, une fois que l'objet communicant a déterminé au moins une information sur son contexte d'utilisation et qu'il a bien déterminé une localisation associée à au moins un dispositif d'appairage ;
- n'exécute l'action d'appairage que si le dispositif d'appairage identifié dans la requête d'appairage reçue correspond bien au dispositif d'appairage associé à la localisation déterminée et que cette localisation correspond à celle de l'objet. Ainsi, tout risque pour l'objet communicant de s'appairer à mauvais escient avec le dispositif de d'appairage, voire un autre dispositif d'appairage non souhaité en provenance duquel l'objet communicant aurait reçu une requête d'appairage, est complètement écarté.

L'invention permet avantageusement à l'objet communicant de procéder de sa propre initiative à un filtrage des différentes requêtes d'appairage reçues de manière à sélectionner le dispositif d'appairage qui est adapté pour autoriser l'appairage et le déclenchement de la communication entre l'objet communicant et le dispositif de communication associé à ce dispositif d'appairage.

Ainsi, grâce à ce double niveau de sécurité appliqué par l'objet communicant, le procédé de communication selon l'invention est rendu particulièrement fiable et performant.

Selon un mode de réalisation particulier, l'activation de la réception d'au moins une requête d'appairage est mise en œuvre comme suit :
- comparer un premier ensemble d'informations incluant ladite au moins une information de contexte d'utilisation de l'objet communicant et des données relatives à la localisation qui a été associée audit au moins un dispositif d'appairage à au moins un deuxième ensemble d'informations de référence qui caractérise une situation d'appairage d'un objet communicant comme étant valide,
- si une concordance existe entre le premier ensemble d'informations et le deuxième ensemble d'informations, activer la réception de ladite au moins une requête d'appairage,
- sinon empêcher l'activation de ladite réception.

Ce mode de réalisation permet ainsi à l'objet communicant, grâce à un mécanisme décisionnel particulièrement simple, d'activer ses moyens d'appairage de sa propre initiative, uniquement à partir d'informations déterminées par l'objet communicant et quand sa situation d'appairage est considérée comme propice compte tenu des informations contenues dans le et/ou les ensembles de référence à disposition. Ainsi, en dehors d'une telle situation d'appairage valide, l'objet communicant demeure par défaut en situation de non appairage, ce qui permet d'économiser la batterie de cet objet.

Selon un autre mode de réalisation particulier, l'activation de la réception d'au moins une requête d'appairage est mise en œuvre comme suit :
- combiner ladite au moins une information de contexte d'utilisation de l'objet communicant et des données relatives à la localisation associée audit au moins un dispositif d'appairage,
- obtenir un score représentatif du résultat de la combinaison,
- comparer le score obtenu à un seuil,
- en fonction du résultat de la comparaison, activer ou non la réception d'au moins une requête d'appairage.

Ce mode de réalisation constitue une variante décisionnelle par rapport au mode de réalisation précédent, avec des avantages similaires. Dans cette variante, un score, par exemple compris entre 0 et 1, est attribué à la combinaison de ladite au moins une information de contexte d'utilisation de l'objet et des données de localisation qui ont été associées préalablement à au moins un dispositif d'appairage. Ce score est alors comparé à un seuil de référence, par exemple 0.6, qui caractérise une situation d'appairage par exemple valide au-dessus de ce seuil et une situation d'appairage invalide en-dessous de ce seuil (l'inverse est également possible selon la convention de comparaison établie). Si le score attribué est supérieur (ou supérieur ou égal) à ce seuil de référence, l'objet communicant se met à l'écoute des requêtes d'appairage susceptibles de lui parvenir en provenance d'un ou de plusieurs dispositifs d'appairage. Si le score attribué est inférieur (ou inférieur ou égal) à ce seuil de référence, l'objet communicant demeure par défaut en situation de non appairage.

Selon un autre mode de réalisation particulier, la au moins une information de contexte d'utilisation de l'objet communicant est représentative d'un environnement dans lequel se trouve l'objet communicant ou contient au moins une donnée de fonctionnement de l'objet communicant.

La au moins une information de contexte d'utilisation déterminée en toute autonomie par l'objet communicant est particulièrement précise et fiable étant donné qu'elle est liée à l'environnement même dans lequel se trouve l'objet communicant et/ou qu'elle est basée sur des données de fonctionnement de cet objet.

Selon un autre mode de réalisation particulier, la au moins une information de contexte d'utilisation représentative d'un environnement dans lequel se trouve l'objet communicant est contenue dans un message reçu par l'objet communicant en provenance d'un dispositif d'appairage associé à ladite zone ou d'un dispositif d'émission de message situé dans ledit environnement, ladite au moins une information indiquant un lieu à proximité de l'objet communicant.

Selon un autre mode de réalisation particulier, la au moins une information de contexte d'utilisation représentative d'un environnement dans lequel se trouve l'objet communicant comprend une donnée de géolocalisation de l'objet communicant par rapport au dispositif d'appairage associé à ladite zone.

Selon un autre mode de réalisation particulier, la au moins une information de contexte d'utilisation représentative d'un environnement dans lequel se trouve l'objet communicant contient une donnée issue d'au moins un capteur appartenant à l'objet communicant.

Selon un autre mode de réalisation particulier, la au moins une donnée de fonctionnement de l'objet communicant contenue dans la au moins une information de contexte d'utilisation est un paramètre de fonctionnement courant relevé par l'objet communicant ou un élément d'un historique des communications ou des transactions effectuées par l'objet communicant.

Selon un autre mode de réalisation particulier, la localisation du dispositif d'appairage identifié est déterminée à partir d'une mémoire de l'objet communicant.

Un tel mode de réalisation permet avantageusement à l'objet communicant d'avoir directement accès aux données de localisation associées à un dispositif d'appairage sans avoir à solliciter le réseau de communication pour obtenir ces données au moment de l'appairage, via ce dispositif d'appairage, avec le dispositif de communication souhaité ou juste avant cet appairage. Le dispositif d'appairage est ainsi connu et référencé dans l'objet communicant avant toute action d'appairage entre cet objet et le dispositif de communication associé à ce dispositif d'appairage.

L'intérêt de stocker à l'avance dans l'objet communicant des données de localisation associées au dispositif d'appairage, et s'il y a lieu des données de localisation associées à d'autres dispositifs d'appairage, est de renforcer la sécurité de l'appairage, et donc de la communication qui s'ensuit, en évitant tout ajout frauduleux d'un dispositif de communication non sollicité car non associé à un dispositif d'appairage connu de l'objet communicant.

Selon un autre mode de réalisation particulier, la localisation associée audit au moins un dispositif d'appairage est déterminée à partir du contenu d'un message reçu en provenance dudit au moins un dispositif d'appairage ou d'un dispositif d'émission de messages situé dans l'environnement de l'objet communicant.

Un tel mode de réalisation permet avantageusement à l'objet communicant d'avoir accès de manière dynamique :
- à la localisation associée au dispositif de d'appairage, lui-même associé au dispositif de communication avec lequel l'objet communicant souhaite communiquer, et
- aux données de localisation associées à d'autres dispositifs d'appairage potentiels, ce qui permet d'économiser les ressources en mémoire de l'objet communicant tout en bénéficiant de données de localisation mises à jour au fil de l'eau.

Les différents modes ou caractéristiques de réalisation précités peuvent être ajoutés indépendamment ou en combinaison les uns avec les autres, au procédé de communication sans contact défini ci-dessus.

L'invention concerne également un objet communicant ayant des capacités de communication sans contact avec un dispositif de communication, pour la mise en œuvre d'une transaction relative à la fourniture d'un bien ou d'un service.

Un tel objet communicant est remarquable en ce qu'il comprend un processeur qui est configuré pour mettre en œuvre, au niveau de l'objet communicant situé dans une zone où la transaction est mise en œuvre, une exécution de manière autonome de ce qui suit :
- activer la réception d'au moins une requête d'appairage en provenance d'un ou de plusieurs dispositifs d'appairage associés à la zone, quand l'objet communicant a déterminé au moins une information de contexte d'utilisation de l'objet communicant ainsi qu'une localisation associée à au moins un dispositif d'appairage qui est associé à la zone,
- quand un dispositif d'appairage identifié dans ladite au moins une requête d'appairage reçue correspond audit au moins un dispositif d'appairage associé à la zone et que la localisation associée audit au moins un dispositif d'appairage correspond à la localisation de l'objet communicant dans la zone, s'appairer avec le dispositif de communication, ledit dispositif de communication étant associé au dispositif d'appairage identifié.

Un tel objet communicant est notamment apte à mettre en œuvre le procédé de communication sans contact précité.

L'invention concerne également un système de communication sans contact.

Un tel système de communication sans contact est remarquable en ce qu'il comprend :
- un objet communicant mettant en œuvre le procédé de communication sans contact précité,
- un dispositif de communication associé à un dispositif d'appairage qui est lui-même associé à la zone où la transaction est mise en œuvre.

L'invention concerne encore un programme d'ordinateur comportant des instructions pour la mise en œuvre du procédé de communication sans contact selon l'invention, selon l'un quelconque des modes particuliers de réalisation décrits précédemment, lorsque ledit programme est exécuté par un processeur.

De telles instructions peuvent être stockées durablement dans un support mémoire non transitoire de l'objet communicant mettant en œuvre le procédé de communication sans contact selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement ou support d'informations lisible par un ordinateur, et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel que par exemple une clé USB, tel qu'une ROM, par exemple un CD ROM ou une ROM de circuit microélectronique, ou encore un moyen d'enregistrement magnétique, par exemple un support mobile (carte mémoire), un disque dur ou un SSD.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de communication sans contact précité.

Selon un exemple de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

### Brève description des dessins

D'autres caractéristiques et avantages apparaîtront à la lecture de modes de réalisation particuliers de l'invention, donnés à titre d'exemples illustratifs et non limitatifs, et des dessins annexés, parmi lesquels :
La figure 1A représente un système de communication sans contact selon un premier mode de réalisation de l'invention,
La figure 1B représente un système de communication sans contact selon un deuxième mode de réalisation de l'invention,
La figure 1C représente un système de communication sans contact selon un troisième mode de réalisation de l'invention,
La figure 2 représente un objet communicant dans un mode de réalisation de l'invention,
La figure 3 représente des exemples de configuration possibles de zones dans lesquelles est mise en œuvre la communication sans contact,
La figure 4 représente les principales actions mises en œuvre dans le procédé de communication sans contact, selon un mode de réalisation particulier de l'invention,
La figure 5A représente un premier mode de réalisation d'une phase de décision mise en œuvre dans le procédé de communication sans contact selon l'invention,
La figure 5B représente un deuxième mode de réalisation d'une phase de décision mise en œuvre dans le procédé de communication sans contact selon l'invention.

### Description détaillée d'un mode de réalisation de l'invention

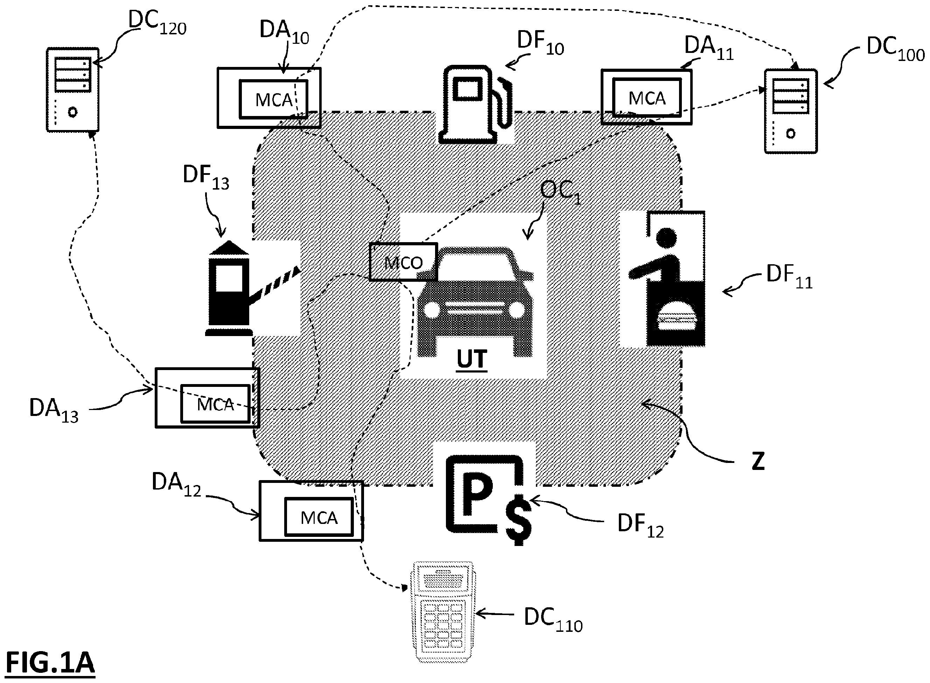

La figure 1A représente un système de communication sans contact selon un premier mode de réalisation de l'invention.

Un tel système comprend :
- un objet connecté ou communicant OC₁ associé à un utilisateur UT, l'objet OC₁ étant équipé d'un module de communication radio MCO qui est configuré pour communiquer selon par exemple la technologie radio courte portée, telle que par exemple NFC, Bluetooth, WiFi, mais également longue portée, telle que par exemple 3G, 4G, 5G, etc. ou autre,
- un dispositif DFᵢ (1≤i≤P) de fourniture d'un bien ou d'un service à l'utilisateur UT,
- un dispositif de communication DCⱼ (1≤j≤Q) configuré pour communiquer avec l'objet OC₁ pour la mise en œuvre d'une transaction relative à la fourniture d'un bien ou d'un service par le dispositif DFᵢ,
- un dispositif d'appairage DAₖ (1≤k≤R) configuré pour appairer l'objet communicant OC₁ à un des Q dispositifs de communication précités, et équipé également d'un module de communication radio MCA correspondant au module de communication radio MCO.

On appelle objet communicant ou connecté tout objet configuré pour capter des données et pour communiquer avec d'autres objets ou avec des infrastructures dédiées selon la technologie IoT (« Internet of Things » en anglais).

Conformément à l'invention :
- le procédé de communication sans contact est mis en œuvre au niveau de l'objet communicant OC₁ qui est situé dans une zone Z où la transaction est mise en œuvre,
- le dispositif d'appairage DAₖ est associé à la zone Z d'une manière qui sera décrite plus loin dans la description.

Dans l'exemple de la figure 1A, l'objet communicant OC₁ est par exemple un véhicule, ici une voiture. A ce titre, la voiture OC₁ est dotée nativement d'une pluralité de capteurs/détecteurs tels que par exemple une caméra, un capteur qui détecte le niveau du réservoir de la voiture, un capteur de vitesse, un dispositif de géolocalisation de type GPS (« Global Positioning System » en anglais), etc.

Dans l'exemple de la figure 1A, en fonction du contexte d'utilisation de la voiture OC₁, le dispositif DFᵢ de fourniture de bien(s) ou de service varie. De manière non exhaustive, la figure 1A représente quatre dispositifs DFᵢ différents :
- une pompe à essence DF₁₀,
- un guichet de vente de nourriture à emporter DF₁₁,
- un parcmètre DF₁₂,
- une barrière de péage DF₁₃.

Chacun des dispositifs DF₁₀ à DF₁₃ est associé à un dispositif d'appairage respectif DA₁₀ à DA₁₃ permettant de s'appairer, via leur module de communication radio MCA respectif, avec la voiture OC₁, via son module de communication MCO correspondant. De tels dispositifs d'appairage DA₁₀ à DA₁₃ sont avantageusement associés à la zone Z. Autrement dit, les dispositifs d'appairage DA₁₀ à DA₁₃ ne sont pas nécessairement présents physiquement dans la zone Z. Ils peuvent être aussi situés à distance ou à l'extérieur de cette zone.

Dans l'exemple de la figure 1A, en fonction du contexte d'utilisation de la voiture OC₁, le dispositif de communication DCⱼ varie également. De manière non exhaustive, la figure 1A représente trois exemples de dispositifs de communication DCⱼ :
- le dispositif de communication DC₁₀₀ qui est un serveur de paiement,
- le dispositif de communication DC₁₁₀ qui est un terminal de paiement, par exemple un TPE pour « terminal de paiement électronique »,
- le dispositif de communication DC₁₂₀ qui est un serveur de contrôle d'accès ou un serveur de paiement.

Dans un contexte d'utilisation d'une station-service, pour lequel l'utilisateur UT est apte à se procurer du carburant auprès du dispositif DF₁₀ mais aussi à acheter de la nourriture à emporter auprès du dispositif DF₁₁, le serveur de paiement DC₁₀₀ peut par exemple être partagé entre les dispositifs DF₁₀ et DF₁₁. Dans l'exemple représenté, le serveur de paiement DC₁₀₀ est distant des dispositifs DF₁₀ et DF₁₁. Selon différentes implémentations possibles, les dispositifs d'appairage DA₁₀ et DA₁₁ associés à la zone Z peuvent être compris ou pas dans le serveur de paiement DC₁₀₀, peuvent être compris ou pas respectivement dans la pompe à essence DF₁₀ et le guichet de vente de nourriture à emporter DF₁₁, ou peuvent être situés hors de la zone Z.

Ainsi, lorsque la voiture OC₁ stationne à la pompe à essence DF₁₀ afin que l'utilisateur UT fasse le plein, une fois l'appairage effectué entre la voiture OC₁ et le dispositif d'appairage DA₁₀, la voiture OC₁ est alors apte à être mise en relation avec le serveur de paiement DC₁₀₀ associé au dispositif d'appairage DA₁₀, comme représenté en pointillé sur la figure 1A, pour mettre en œuvre une transaction, ici un paiement, en liaison avec le remplissage du réservoir de la voiture OC₁ et non un paiement en liaison avec l'achat de nourriture à emporter auprès du guichet DF₁₁ qui n'est pas associé au dispositif d'appairage DA₁₀ mais au dispositif d'appairage DA₁₁. De manière similaire, lorsque la voiture OC₁ stationne au niveau du guichet DF₁₁ afin que l'utilisateur UT récupère de la nourriture à emporter, une fois l'appairage effectué entre la voiture OC₁ et le dispositif d'appairage DA₁₁, la voiture OC₁ est alors apte à être mise en relation avec le dispositif de communication DC₁₀₀ associé au dispositif d'appairage DA₁₁, comme représenté en pointillé sur la figure 1A, pour mettre en œuvre une transaction, ici un paiement, relative à la livraison de la nourriture à emporter. Une telle transaction peut par exemple être mise en œuvre au moyen d'une carte eSIM (« Embedded Subscriber Identification Module » en anglais) installée dans la voiture, d'un porte-monnaie électronique (« e-wallet » en anglais) embarqué dans l'infrastructure informatique de la voiture et dans lequel a/ont été préchargée(s) une ou plusieurs unités de monnaie numérique (« tokens » en anglais) de carte bancaire, etc.

Dans le cas du contexte d'utilisation du parcmètre DF₁₂ de la figure 1A, une fois l'appairage effectué entre la voiture OC₁ et le dispositif d'appairage DA₁₂, la voiture OC₁ est alors apte à être mise en relation avec le terminal de paiement DC₁₁₀ associé au dispositif d'appairage DA₁₂, comme représenté en pointillé sur la figure 1A, pour mettre en œuvre une transaction bancaire relative au stationnement de la voiture OC₁. Dans cet exemple, le terminal de paiement DC₁₁₀ est intégré au parcmètre DF₁₂ ou situé à proximité de celui-ci.

Selon différentes implémentations possibles, le dispositif d'appairage DA₁₂ associé à la zone Z peut être compris ou pas dans le terminal de paiement DC₁₁₀, peut être compris ou pas dans le parcmètre DF₁₂, ou peut être situé hors de la zone Z.

Dans le cas du contexte d'utilisation du péage DF₁₃ de la figure 1A, une fois l'appairage effectué entre la voiture OC₁ et le dispositif d'appairage DA₁₃, la voiture OC₁ est alors apte à être mise en relation avec le serveur de contrôle d'accès ou le serveur de paiement DC₁₂₀ associé au dispositif d'appairage DA₁₃, comme représenté en pointillé sur la figure 1A, pour mettre en œuvre une transaction relative au contrôle d'accès de la voiture OC₁ ou au paiement, puis à l'accès au péage de la voiture OC₁. Dans cet exemple, le serveur de contrôle d'accès DC₁₂₀ est distant du péage DF₁₃.

Selon différentes implémentations possibles, le dispositif d'appairage DA₁₃ associé à la zone Z peut être compris ou pas dans le serveur de contrôle d'accès ou le serveur de paiement DC₁₂₀, peut être compris ou pas dans la barrière ou le guichet de péage DF₁₃, ou peut être situé hors de la zone Z.

Les exemples précités sont bien entendu non limitatifs. Dans certaines variantes, par exemple dans le contexte d'utilisation du parcmètre DF₁₂, ce dernier pourrait former une seule entité intégrant le dispositif d'appairage DA₁₂ et le terminal de paiement DC₁₁₀.

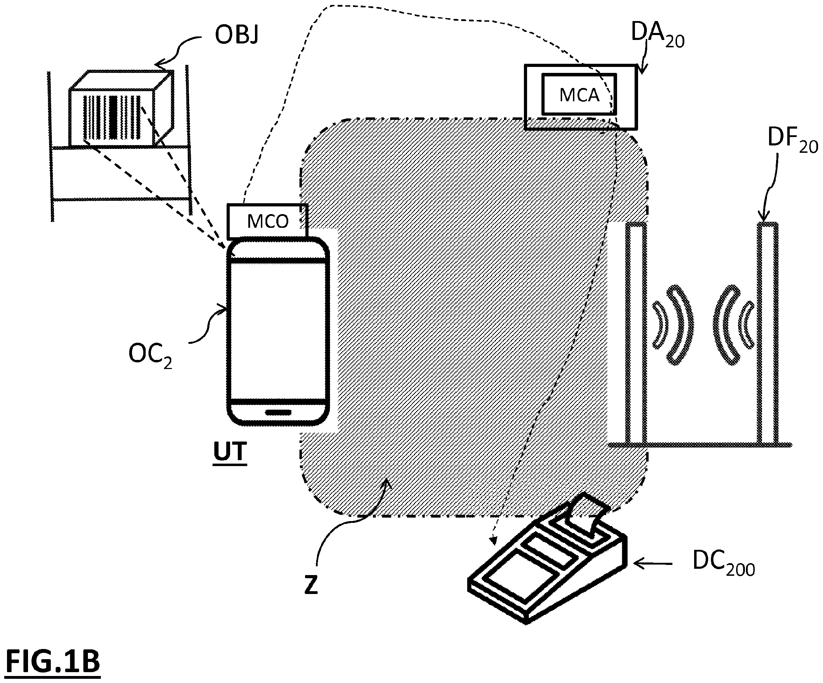

La figure 1B représente un système de communication sans contact selon un deuxième mode de réalisation de l'invention. Ce deuxième mode de réalisation utilise des éléments communs à ceux de la figure 1A. Pour cette raison, ces éléments sont désignés avec les mêmes références.

Un tel système comprend :
- un objet connecté ou communicant OC₂ associé à un utilisateur UT, l'objet OC₂ étant équipé d'un module de communication radio MCO,
- un dispositif DF₂₀ de fourniture d'un bien ou d'un service à l'utilisateur UT,
- un dispositif de communication DC₂₀₀ configuré pour communiquer avec l'objet OC₂ pour la mise en œuvre d'une transaction relative à la fourniture d'un bien ou d'un service par le dispositif DF₂₀,
- un dispositif d'appairage DA₂₀ configuré pour appairer l'objet communicant OC₂ au dispositif de communication précité, et équipé également d'un module de communication radio MCA correspondant au module de communication radio MCO. Conformément à l'invention, le dispositif d'appairage DA₂₀ est avantageusement associé à la zone Z, en ce sens qu'il n'est pas nécessairement présent physiquement dans la zone Z. Le dispositif d'appairage DA₂₀ peut être aussi situé à distance ou à l'extérieur de cette zone.

Dans l'exemple de la figure 1B, l'objet communicant OC₂ est un objet porté par l'utilisateur UT, tel que par exemple un smartphone (« téléphone intelligent »). Il pourrait bien sûr s'agir en variante d'une tablette, d'un badge, d'un bracelet, etc.

A ce titre, le smartphone OC₂ est doté nativement d'une pluralité de capteurs/détecteurs tels que par exemple une caméra, un appareil photo, un accéléromètre, un dispositif de géolocalisation de type GPS, etc.

Dans l'exemple de la figure 1B, le contexte d'utilisation du smartphone OC₂ est l'achat d'un objet OBJ en boutique. A cet effet, le dispositif DF₂₀ de fourniture de bien(s) ou de service est par exemple le portique antivol de la boutique.

Le portique antivol DF₂₀ est associé au dispositif d'appairage DA₂₀ permettant de s'appairer, via son module de communication radio MCA, avec le smartphone OC₂, via le module de communication MCO de ce dernier.

Dans un tel contexte de paiement d'un objet OBJ, le dispositif de communication DC₂₀₀ est un terminal de paiement placé par exemple à proximité du portique antivol DF₂₀, notamment au niveau de la caisse de la boutique.

Le dispositif d'appairage DA₂₀ peut être compris dans le portique antivol DF₂₀ ou dans le terminal de paiement DC₂₀₀. Le dispositif d'appairage DA₂₀ peut également être situé ailleurs que dans la boutique compte tenu du fait qu'il est associé à la zone Z.

Ainsi, lorsque l'utilisateur UT est en boutique pour se procurer l'objet OBJ, une fois l'appairage effectué entre le smartphone OC₂ et le dispositif d'appairage DA₂₀, le smartphone OC₂ est alors apte à être mis en relation avec le terminal de paiement DC₂₀₀ associé au dispositif d'appairage DA₂₀, comme représenté en pointillé sur la figure 1B, pour mettre en œuvre, dans la zone Z, une transaction, ici un paiement, qui est relative à la fourniture de l'objet OBJ. Une telle transaction est mise en œuvre au moyen par exemple d'une une carte SIM ou eSIM installée dans le smartphone, un porte-monnaie électronique embarqué dans le smartphone et dans lequel a/ont été préchargée(s) une ou plusieurs unités de monnaie numérique (« tokens » en anglais) de carte bancaire, etc.

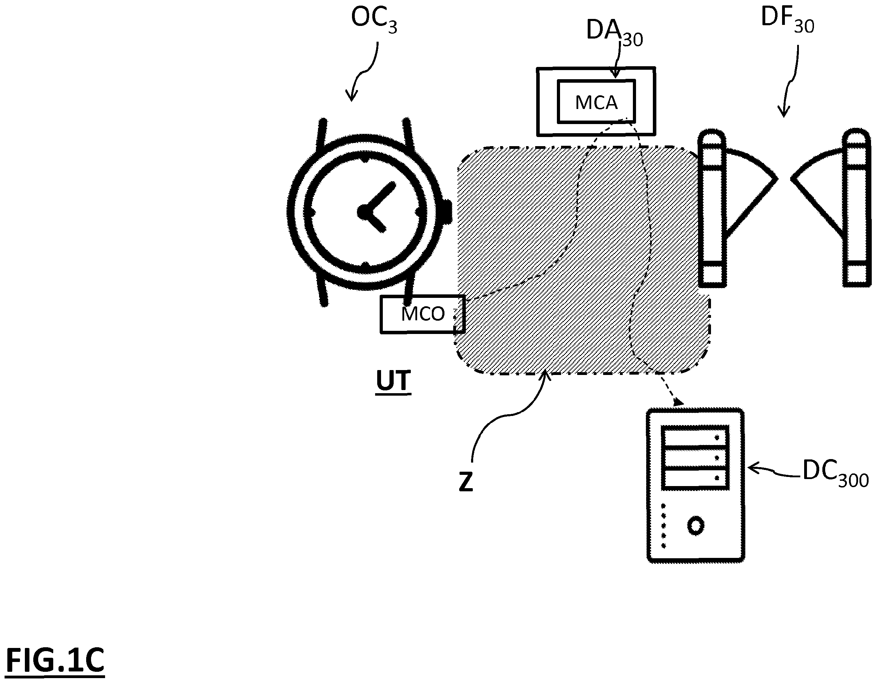

La figure 1C représente un système de communication sans contact selon un troisième mode de réalisation de l'invention. Ce mode de réalisation utilise des éléments communs à ceux des figures 1A et 1B présentées précédemment. Pour cette raison, ces éléments sont désignés avec les mêmes références.

Un tel système comprend :
- un objet connecté ou communicant OC₃ associé à un utilisateur UT, l'objet OC₃ étant équipé d'un module de communication radio MCO,
- un dispositif DF₃₀ de fourniture d'un bien ou d'un service à l'utilisateur UT,
- un dispositif de communication DC₃₀₀ configuré pour communiquer avec l'objet OC₃ pour la mise en œuvre d'une transaction relative à la fourniture d'un bien ou d'un service par le dispositif DF₃₀,
- un dispositif d'appairage DA₃₀ configuré pour appairer l'objet communicant OC₃ au dispositif de communication DC₃₀₀, et équipé également d'un module de communication radio MCA correspondant au module de communication radio MCO. Conformément à l'invention, le dispositif d'appairage DA₃₀ est avantageusement associé à la zone Z, en ce sens qu'il n'est pas nécessairement présent physiquement dans la zone Z. Le dispositif d'appairage DA₃₀ peut être aussi situé à distance ou à l'extérieur de cette zone.

Dans l'exemple de la figure 1C, l'objet communicant OC₃ est un objet porté par l'utilisateur UT, tel que par exemple une montre connectée. Il pourrait bien sûr s'agir d'une tablette, d'un badge, d'un bracelet, de lunettes, etc.

A ce titre, la montre OC₃ est dotée nativement d'une pluralité de capteurs/détecteurs tels que par exemple une caméra, un appareil photo, un accéléromètre, un dispositif de géolocalisation de type GPS, etc.

Dans l'exemple de la figure 1C, le contexte d'utilisation de la montre connectée OC₃ est l'accès à un moyen de transport tel que par exemple le métro, le train, le tramway, etc. A cet effet, le dispositif DF₃₀ de fourniture de bien ou de service est le portillon d'accès à ce moyen de transport. Il peut être aussi une borne disposée dans un bus ou un tramway, à proximité d'un quai dans une gare, etc.

Le portillon DF₃₀ est associé au dispositif d'appairage DA₃₀. A cet effet, le dispositif d'appairage DA₃₀ peut être compris dans le dispositif d'appairage DA₃₀, situé à proximité de celui-ci ou encore à distance de celui-ci.

Dans un tel contexte d'accès à un moyen de transport, le dispositif de communication DC₃₀₀ est un serveur de contrôle d'accès.

Selon différentes implémentations possibles, le dispositif d'appairage DA₃₀ peut être compris dans le portillon DF₃₀ ou dans le serveur de contrôle d'accès DC₃₀₀. Le dispositif d'appairage DA₃₀ peut également être situé ailleurs en dehors de la zone Z.

Ainsi, lorsque l'utilisateur UT s'apprête à franchir le portillon DF₃₀ pour accéder à un moyen de transport, une fois l'appairage effectué entre la montre connectée OC₃ et le dispositif d'appairage DA₃₀, la montre connectée OC₃ est alors apte à être mise en relation avec le serveur de contrôle d'accès DC₃₀₀ associé au dispositif d'appairage DA₃₀, comme représenté en pointillé sur la figure 1C, pour mettre en œuvre, dans la zone Z, une transaction relative à l'accès de l'utilisateur UT au moyen de transport, une telle transaction étant un contrôle de l'accès au moyen de transport. Un tel contrôle d'accès met par exemple en œuvre une décrémentation d'un ou de plusieurs tickets de transport numériques préchargé(s) dans un porte-monnaie électronique de la montre connectée OC₃, dans lequel a/ont été préchargé(s) un ou plusieurs tickets de transport numériques (« tokens » en anglais), un identifiant particulier, etc. Selon un autre exemple, le serveur de contrôle d'accès DC₃₀₀ pourrait valider automatiquement l'accès au moyen de transport sur la base d'un identifiant particulier associé au porte-monnaie électronique de la montre connectée OC₃.

### Description d'un mode de réalisation de l'objet communicant OC

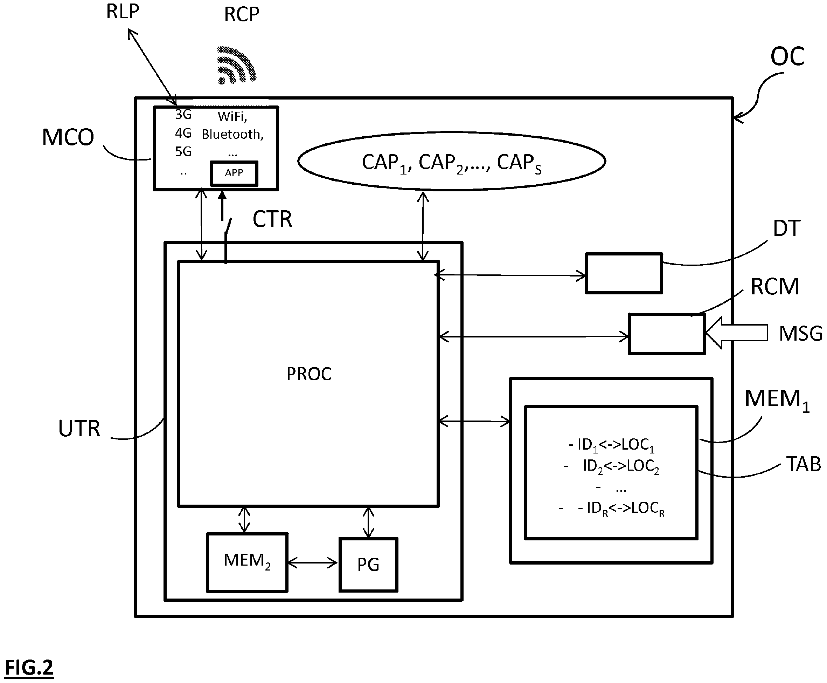

La figure 2 présente la structure simplifiée de l'objet communicant OC, tel que par exemple l'objet OC₁, OC₂ ou OC₃ des figures 1A à 1C, lequel objet communicant est adapté pour mettre en œuvre le procédé de communication sans contact qui va être décrit ci-dessous.

Comme déjà expliqué plus haut, un tel objet communicant comprend classiquement:
- un ou plusieurs capteurs/détecteurs CAP₁, CAP₂,..., CAPₛ (S≥1),
- un module RCM de réception de messages de diffusion MSG, par exemple de type beacon ou de type V2X (« Vehicle-to-Everything » en anglais) quand l'objet communicant OC est plus particulièrement un véhicule, ces messages de diffusion étant reçus en provenance de différents dispositifs et/ou infrastructures que l'objet communicant rencontre sur son trajet,
- le module de communication MCO adapté pour communiquer selon le contexte de communication utilisé, via un réseau de données courte portée (Bluetooth, WiFi, NFC, etc.) désigné par la référence RCP, ou via un réseau de données longue portée (3G, 4G, 5G, etc.) désigné par la référence RLP,
- un module CTR de contrôle de l'activation/désactivation d'un module APP de réception, via le réseau de données RLP ou RCP, de requêtes d'appairage en provenance d'un ou de plusieurs dispositifs d'appairage DA₁, DA₂,..., DA_{R} associé(s) à la zone Z,
- un dispositif de transaction DT tel que par exemple une carte SIM, eSIM, e-wallet, etc.

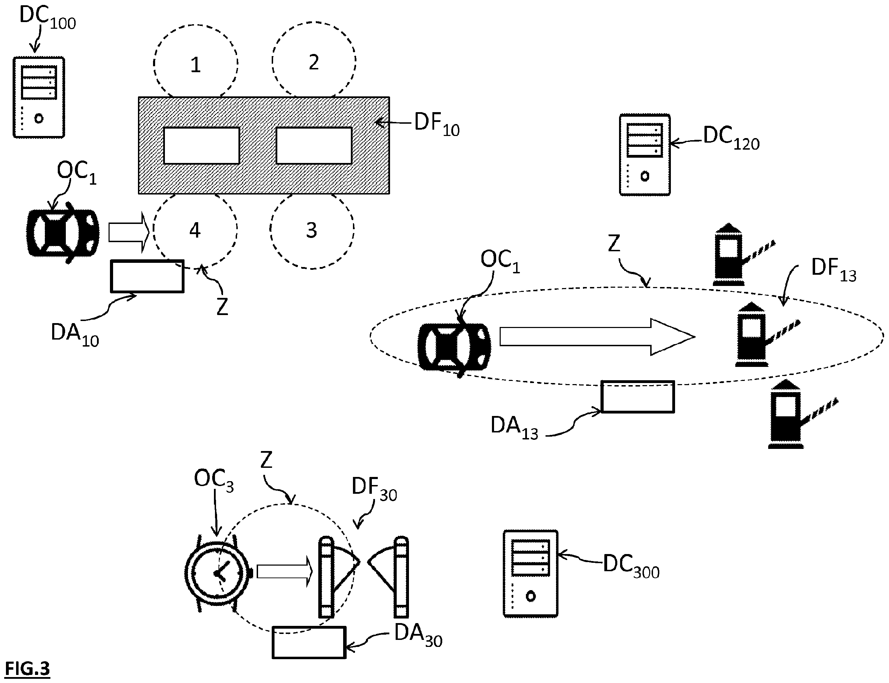

Selon l'invention, l'objet communicant OC comprend une mémoire MEM₁ qui est configurée pour stocker, dans une table TAB, R identifiants ID₁, ID₂,..., ID_{R} relatifs aux R dispositifs d'appairage DA₁, DA₂,..., DA_{R}, avec respectivement R données de localisation LOC₁, LOC₂,..., LOC_{R} définissant R zones Z. Dans chacune des R zones Z est mise en œuvre une transaction particulière, comme cela va être décrit plus loin en référence à la figure 3. De telles données de localisation peuvent être cartésiennes, polaires, sphériques, ou autres. Selon différentes implémentations possibles, les données de localisation de la zone Z sont par exemple :
- un point (latitude, longitude) et le rayon de cette zone, dans le cas où celle-ci est circulaire,
- deux points (latitude, longitude) et une distance entre ces deux points, dans le cas où la zone a la forme d'une ellipse,
- trois points (latitude, longitude), dans le cas où la zone est triangulaire,
- quatre points (latitude, longitude), dans le cas où la zone a la forme d'un quadrilatère,
- ..,
- un nombre quelconque de points définissant le périmètre de la zone.

En variante, la mémoire MEM₁ peut-être déportée dans un réseau de communication, un nuage (« cloud » en anglais), etc. et être rendue accessible par l'objet communicant OC, au moyen du module de communication MCO ou d'un module de communication (non représenté) dédié à cet effet. Selon un mode particulier de réalisation de l'invention, les actions exécutées par l'objet communicant OC, dans le cadre de la mise en œuvre du procédé de communication sans contact conformément à la présente invention, sont mises en œuvre par des instructions d'un programme d'ordinateur PG. Pour cela, l'objet communicant OC a l'architecture classique d'un ordinateur et comprend notamment une mémoire MEM₂, une unité de traitement UTR, équipée par exemple d'un processeur PROC, et pilotée par le programme d'ordinateur PG stocké en mémoire MEM₂. Le programme d'ordinateur PG comprend des instructions pour mettre en œuvre les actions exécutées par l'objet communicant OC, lorsque le programme est exécuté par le processeur PROC, selon l'un quelconque des modes particuliers de réalisation de l'invention.

A l'initialisation, les instructions de code du programme d'ordinateur PG sont par exemple chargées dans une mémoire RAM (non représentée) avant d'être exécutées par le processeur PROC. Le processeur PROC de l'unité de traitement UTR met notamment en œuvre les actions de recueil des données issues du et/ou des capteurs CAP₁, CAP₂,..., CAPₛ, les actions de contrôle par le module CTR de l'activation/désactivation de la réception de requêtes d'appairage en provenance du ou des dispositifs d'appairage DA₁, DA₂,..., DA_{R}, les actions de réception de telles requêtes, les actions de mémorisation des informations relatives au/aux dispositif(s) d'appairage dans la table TAB, les actions de sélection du dispositif d'appairage adéquat par rapport à la localisation de l'objet communicant, les actions d'appairage puis de communication avec un dispositif de communication DCⱼ associé au dispositif d'appairage sélectionné, selon les instructions du programme d'ordinateur PG.

### Description d'un mode de réalisation d'un procédé de communication sans contact

On décrit maintenant le déroulement d'un procédé de communication sans contact entre un objet communicant OC, tel que par exemple l'objet OC₁, OC₂ ou OC₃ des figures 1A à 1C, et un dispositif de communication DCⱼ précité, selon un mode de réalisation de l'invention, pour la mise en œuvre d'une transaction relative à la fourniture d'un bien ou d'un service générée par un dispositif DFᵢ de fourniture d'un bien ou d'un service.

Conformément à l'invention, l'objet communicant OC est configuré de telle manière qu'il exécute de manière autonome les différentes actions qui vont être décrites ci-dessous pour communiquer sans contact avec le dispositif de communication DCⱼ, comme si c'était l'utilisateur UT lui-même qui mettait en œuvre cette communication avec un terminal de communication, un badge, une carte ou autres. Une telle communication sans contact est mise en œuvre quand l'objet communicant OC est situé dans la zone Z où la transaction relative à la fourniture de bien ou de service est mise en œuvre.

Comme on peut le voir sur la figure 3, la taille de la zone Z est variable selon le type d'objet communicant et son contexte d'utilisation.

Par exemple, dans le cas où l'objet communicant est la voiture OC₁ de la figure 1A et où le contexte d'utilisation de cet objet est de faire le plein à une station-service, la zone Z est suffisamment réduite pour discriminer un véhicule unique, qui, dans l'exemple de la figure 3, est la voiture OC₁ stationnée à la pompe DF₁₀, à l'emplacement n°4. Conformément à l'invention, des données de localisation LOC₁₀ définissant l'emplacement n°4 auront été préalablement associées à un identifiant ID₁₀ du dispositif d'appairage DA₁₀ précité.

Selon un autre exemple représenté, dans le cas où l'objet communicant est la voiture OC₁ de la figure 1A et où le contexte d'utilisation de cet objet est le paiement à un péage DF₁₃, la zone géographique Z pourra être beaucoup plus étendue, afin de permettre l'appairage et la communication pour mettre en œuvre le paiement ou le contrôle d'accès, suffisamment en amont du passage effectif du péage DF₁₃. Conformément à l'invention, des données de localisation LOC₁₃ définissant la zone Z auront été préalablement associées à un identifiant ID₁₃ du dispositif d'appairage DA₁₃ précité.

Dans le cas où l'objet communicant est la montre connectée OC₃ de la figure 1C et où le contexte d'utilisation de cet objet est l'accès à un moyen de transport via un portillon DF₁₂, la zone géographique Z a par exemple une étendue relativement faible allant de quelques centimètres à 1 mètre de diamètre par exemple. Conformément à l'invention, des données de localisation LOC₃₀ définissant la zone Z auront été préalablement associées à un identifiant ID₃₀ du dispositif d'appairage DA₃₀ précité. Lorsque la zone géographique Z avoisine d'autres zones géographiques, par exemple les zones géographiques délimitant les emplacements N°1 à 3 de la station-service, il est fait en sorte qu'aucune des zones ne se chevauche. Ainsi, l'identifiant du dispositif d'appairage DA₁₀ sera dans ce cas d'usage associé à des données de localisation définissant chacun de ces emplacements. De cette façon, la voiture OC₁ qui entre dans la zone Z est parfaitement discriminée par rapport aux autres véhicules susceptibles de stationner dans les zones voisines, permettant ainsi à l'appairage entre la voiture OC₁ et le serveur de paiement DC₁₀₀, via le dispositif d'appairage DA₁₀, d'aboutir correctement. En outre, quel que soit le contexte d'utilisation de l'objet communicant, il est fait également en sorte que chaque dispositif d'appairage soit associé à une zone Z de manière à rendre optimal l'appairage avec l'objet communicant situé dans cette même zone, et donc la communication sans contact qui s'ensuit entre l'objet communicant et le dispositif de communication associé à ce dispositif d'appairage. Les données de localisation définissant une zone Z seront dont sélectionnées finement à cet effet.

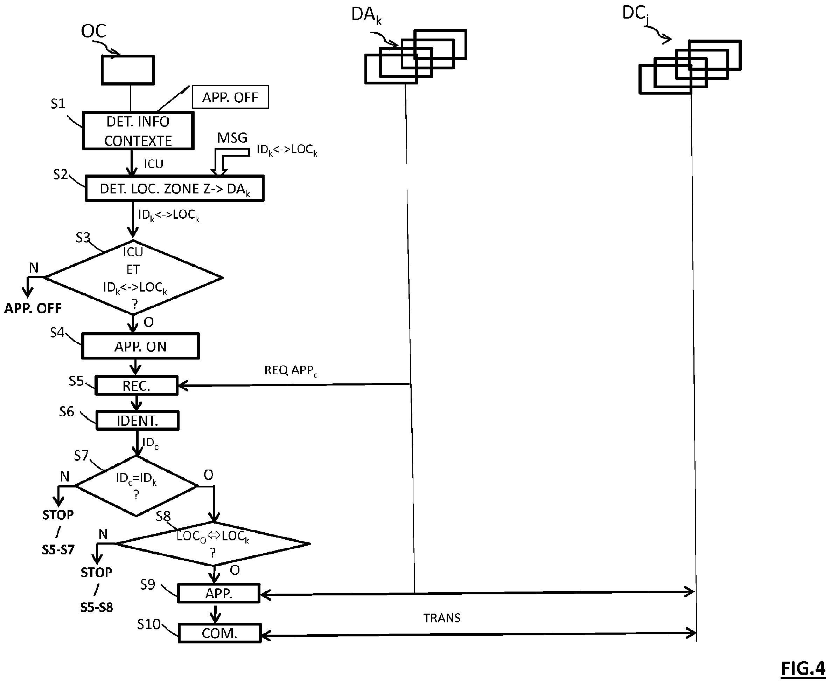

Les actions exécutées par l'objet communicant OC pour mettre en œuvre le procédé de communication sans contact selon l'invention sont maintenant illustrées sur la figure 4.

En S1, l'objet communicant OC, qui se déplace en direction d'un dispositif DFᵢ de fourniture d'un bien ou d'un service à un utilisateur UT de cet objet, détermine une ou plusieurs informations ICU de contexte d'utilisation de l'objet communicant OC.

Cette ou ces informations de contexte d'utilisation ICU sont représentatives d'un environnement dans lequel se trouve l'objet communicant OC ou contiennent au moins une donnée de fonctionnement de cet objet. A l'étape S1, l'objet communicant OC est situé dans la zone Z où la transaction est mise en œuvre.

A ce stade, l'objet communicant OC n'est pas en situation de communiquer avec un dispositif de communication DCⱼ, le mode appairage du module de communication MCO n'étant pas activé (APP. OFF) par le module CTR de la figure 2.

Plus précisément et à titre d'exemples non exhaustifs, une information ICU de contexte d'utilisation représentative d'un environnement dans lequel se trouve l'objet communicant OC ou contenant au moins une donnée de fonctionnement de cet objet peut être :
- une information INF₁ contenue dans un message reçu par l'objet communicant OC en provenance par exemple d'un dispositif d'appairage DAₖ ou d'un dispositif d'émission de message(s) situé dans la zone Z ou au voisinage de celle-ci, cette information indiquant un lieu à proximité de l'objet communicant OC, et/ou
- une donnée INF₂ de géolocalisation de l'objet communicant OC dans la zone Z, et/ou
- une information INF₃ basée sur une donnée issue d'au moins un des capteurs CAP₁, CAP₂,..., CAPₛ appartenant à l'objet communicant OC et interprétée par celui-ci, et/ou
- un paramètre de fonctionnement courant INF₄ relevé par l'objet communicant OC, et/ou
- un élément INF₅ d'un historique des communications ou des transactions effectuées par l'objet communicant OC avant que celui-ci ne parvienne dans la zone Z, tel que par exemple le ou les paiements réalisé(s) antérieurement par l'objet OC, le type de bien ou de service payé mais aussi le type de titre de transport utilisé précédemment, le/les péage(s) emprunté(s) précédemment, le/les parking(s) utilisé(s) précédemment, etc.

L'information INF₁ désigne par exemple un lieu particulier correspondant à la zone Z, le type de bien ou de service fourni par un dispositif DFᵢ de fourniture d'un bien ou d'un service qui se trouve dans la zone Z, l'enseigne d'un magasin ou d'une boutique associée au dispositif DFᵢ de fourniture d'un bien ou d'un service.

Dans le contexte d'utilisation représenté sur la figure 1A, où l'objet communicant OC est une voiture OC₁, l'information INF₁ reçue par la voiture OC₁, via le module de réception RCM de la figure 2, est véhiculée par exemple dans un message MSG diffusé par un des dispositifs d'appairage DA₁₀ à DA₁₃ ou par un des dispositifs DF₁₀ à DF₁₃ de fourniture d'un bien ou d'un service, selon le contexte d'utilisation de la voiture OC₁. Le message MSG peut également être diffusé par toute infrastructure adaptée telle qu'une station-service qui gère l'ensemble des pompes, un restaurant, un centre routier, une collectivité territoriale, etc...

Un tel message MSG est par exemple de type beacon, V2X, UWB (« Ultra wideband » en anglais), WiFi multicast, ou encore LiFi (« Light Fidelity » en anglais), etc...

Typiquement, cette information INF₁ désigne par exemple :
- le nom de la station-service où se trouve la pompe DF₁₀, le numéro de cette pompe, etc...
- le type de restauration, par exemple « fast food », associé au guichet de nourriture à emporter DF₁₁,
- le nom du quartier ou de la rue dans laquelle se trouve le parcmètre DF₁₂,
- la ville dans laquelle se trouve le péage DF₁₃ ou un identifiant d'une des barrières de ce péage.

Dans le contexte d'utilisation représenté sur la figure 1B, où l'objet communicant OC est un smartphone OC₂, l'information INF₁ reçue par le smartphone, via le module de réception RCM de la figure 2, est véhiculée par exemple dans un message MSG de type beacon diffusé par le dispositif d'appairage DA₂₀, le portique antivol DF₂₀, ou un émetteur placé à l'entrée de la boutique, etc. Typiquement, cette information INF₁ désigne par exemple le nom de la boutique, des informations de géolocalisation du smartphone OC₂ dans la boutique, etc.

Dans le contexte d'utilisation représenté sur la figure 1C, où l'objet communicant OC est une montre connectée OC₃, l'information INF₁ reçue par la montre, via le module de réception RCM de la figure 2, est véhiculée par exemple dans un message MSG de type beacon ou de type « notification push» diffusé par le dispositif d'appairage DA₃₀, le portillon DF₃₀, ou un émetteur placé en gare ou en station, etc. Typiquement, cette information INF₁ désigne par exemple le nom d'une station ou d'un arrêt de bus/tramway, l'identifiant d'une ligne de transport, des informations de géolocalisation de la montre connectée OC₃ dans la gare ou la station, etc.

En ce qui concerne l'information INF₃, dans le contexte d'utilisation représenté sur la figure 1A, où l'objet communicant OC est une voiture OC₁, l'information INF₃ correspond par exemple à une enseigne de la station-service, du fast-food, au nom du parking ou du péage, etc. qui ont été reconnus après analyse d'une image ou d'une vidéo capturée par un des capteurs CAP₁, CAP₂,..., CAPₛ de la voiture OC₁, typiquement un appareil photo ou une caméra. Il peut s'agir également des métadonnées associées à cette image, telles que par exemple la position géographique de la station-service, du fast-food, du parking ou du péage, la date et/ou l'heure de capture de l'image ou de la vidéo. L'information INF₃ correspond également dans ce contexte d'utilisation aux coordonnées géographiques (cartésiennes, polaires, sphériques, etc.) de la voiture OC₁ qui sont mesurées par un des capteurs CAP₁, CAP₂,..., CAPₛ de la voiture OC₁, typiquement un dispositif GPS.

Dans le contexte d'utilisation représenté sur la figure 1B, où l'objet communicant OC est un smartphone OC₂, l'information INF₃ correspond par exemple au type de l'objet OBJ reconnu après analyse d'un code-barres ou QR code (« Quick Response Code » en anglais) scanné au préalable par l'utilisateur UT à l'aide du smartphone OC₂, via un des capteurs CAP₁, CAP₂,..., CAPₛ du smartphone OC₂, typiquement un scanner. L'information INF₃ correspond également dans ce contexte d'utilisation aux coordonnées géographiques (cartésiennes, polaires, sphériques, etc.) du smartphone OC₂ qui sont mesurées par un des capteurs CAP₁, CAP₂,..., CAPₛ du smartphone OC₂, typiquement un dispositif GPS.

Dans le contexte d'utilisation représenté sur la figure 1C, où l'objet communicant OC est une montre connectée OC₃, l'information INF₃ correspond par exemple au nom de la station ou de la gare, à un identifiant de la ligne de transport empruntée par l'utilisateur UT, etc. qui ont été reconnus après analyse d'une image ou d'une vidéo capturée par un des capteurs CAP₁, CAP₂,..., CAPₛ de la montre OC₃, typiquement un appareil photo ou une caméra. Il peut s'agir également des métadonnées associées à cette image, telles que la position géographique de la station ou de la gare, la date et/ou l'heure de capture de l'image ou de la vidéo. L'information INF₃ peut également correspondre, dans ce contexte d'utilisation, à une vitesse mesurée par un des capteurs CAP₁, CAP₂,..., CAPₛ de la montre OC₃, typiquement un accéléromètre. L'information INF₃ correspond également, dans ce contexte d'utilisation, aux coordonnées géographiques (cartésiennes, polaires, sphériques, etc.) de la montre OC₃ qui sont mesurées par un des capteurs CAP₁, CAP₂,..., CAPₛ de la montre OC₃, typiquement un dispositif GPS.

Le paramètre de fonctionnement INF₄ correspond, plus particulièrement dans le contexte d'utilisation de la figure 1A, où l'objet communicant OC est une voiture OC₁, aux paramètres liés à l'infrastructure de la voiture OC₁ et remontés via un multiplex ou un bus de données installé dans la voiture. Il s'agit par exemple de la vitesse courante, de l'ouverture/fermeture de la trappe à carburant, de la diminution/élévation du niveau de carburant dans le réservoir, de l'ouverture/fermeture d'une portière, etc...

En référence à nouveau à la figure 4, en S2, l'objet communicant OC qui se déplace en direction d'un dispositif DFᵢ de fourniture d'un bien ou d'un service à un utilisateur UT de cet objet, détermine la localisation de la zone géographique Z associée à au moins un dispositif d'appairage DAₖ. A cet effet, selon un premier mode de réalisation, lorsque l'objet communicant OC arrive dans la zone Z, ou un peu avant son arrivée, il mémorise au préalable dans la table TAB stockée en mémoire MEM₁ (figure 2), pour chaque dispositif d'appairage DAₖ associé à la zone Z :
- l'identifiant ID₁ du dispositif d'appairage DA₁ en association avec des données de localisation LOC₁ d'une zone Z donnée, dans laquelle une transaction impliquant le dispositif d'appairage DA₁ est mise en œuvre,
- ..,
- l'identifiant ID_{R} du dispositif d'appairage DA_{R} en association avec des données de localisation LOC_{R} d'une zone Z donnée, dans laquelle une transaction impliquant le dispositif d'appairage DA_{R} est mise en oeuvre.

Les informations de cette table TAB sont reçues à l'aide d'une technique de géolocalisation de l'objet communicant OC dans son environnement proche. Ces informations sont par ailleurs sécurisées de manière appropriée, pour contrecarrer les fraudes à l'ajout d'un faux dispositif d'appairage.

Selon un deuxième mode de réalisation, l'identifiant IDₖ, ainsi que les données de localisation LOCₖ de la zone Z associée au dispositif d'appairage DAₖ, sont obtenus dynamiquement par l'objet communicant OC de façon à préserver les ressources de la mémoire MEM₁. Ces informations sont reçues par le module de réception RCM de l'objet communicant OC (figure 2) sous la forme d'un message de type beacon ou notification push, ou UWB, ou WiFi multicast, ou selon la technologie LiFi, quel que soit l'objet communicant considéré parmi les objets OC₁, OC₂, OC₃, ou un message de type V2X dans le cas où l'objet OC est plus spécifiquement un véhicule OC₁. L'identifiant IDₖ, ainsi que les données de localisation LOCₖ, qui sont reçues sont également sécurisés pour les mêmes raisons que dans le premier mode de réalisation, au moyen par exemple d'un ou de plusieurs certificats vérifiables auprès d'une autorité.

Pour un dispositif d'appairage DAₖ ainsi référencé par l'objet communicant OC dans la table TAB ou obtenu dynamiquement, des informations associées peuvent en outre être disponibles, telles que par exemple :
- une clé publique pour déchiffrer les messages de transaction qui seront émis lors de la communication sans contact entre l'objet communicant OC et le dispositif de communication DCᵢ associé au dispositif d'appairage DAₖ considéré,
- éventuellement une information de catégorie d'un bien ou d'un service susceptible d'être facturé ou utilisé lors de la transaction (catégorie station-service, catégorie fast-food, catégorie parking, catégorie péage, catégorie bus, métro, train, tramway, catégorie boutique « téléphonie », « librairie », etc.).

Un dispositif d'appairage DAₖ considéré, et donc le dispositif DFᵢ de fourniture de bien et de service et le dispositif de communication DCⱼ qui lui sont associés, correspondent à une géolocalisation précise de la zone Z, dont l'échelle est le centimètre, qui est un passage obligé de l'objet communicant OC avant ou après fourniture du service ou du bien. La précision centimétrique atteignable à l'heure actuelle optimise la localisation de l'objet communicant OC dans la zone Z associée au dispositif d'appairage DAₖ, via par exemple des technologies UWB, RTK (« Real Time Kinematic » en anglais)-GPS ou toute autre technique qui permet de se localiser dans l'espace. Ainsi, dans le cas par exemple de la figure 3, la voiture OC₁ est apte à être localisée au centimètre près dans la zone Z (emplacement n°4) associée au dispositif d'appairage D₁₀. Dans le cas de la figure 1B, le smartphone OC₂ est apte à être localisé dans la zone Z associée au dispositif d'appairage D₂₀ au centimètre près, au niveau du portique antivol DF₂₀. Dans le cas de la figure 1C, la montre connectée OC₃ est apte à être localisée au centimètre près dans la zone Z associée au dispositif d'appairage D₃₀, au niveau du portillon d'accès DF₃₀.

En S3 sur la figure 4, l'objet communicant OC vérifie si au moins une information de contexte ICU et la localisation LOCₖ d'une zone Z associée à au moins un dispositif d'appairage DAₖ ont été déterminées. Si le résultat de cette analyse est négatif (N sur la figure 4), le mode appairage du module de communication MCO reste désactivé (APP. OFF). L'objet communicant OC n'est donc pas apte à recevoir des requêtes d'appairage en provenance de dispositifs d'appairage, ce qui constitue un premier niveau de sécurité du procédé de communication sans contact de l'objet communicant OC avec un dispositif de communication DCⱼ, empêchant de ce fait l'objet communicant OC de s'appairer à mauvais escient ou de manière frauduleuse avec un tel dispositif de communication.

Si le résultat de cette analyse est positif (O sur la figure 4), le mode appairage du module de communication MCO est activé (APP. ON) en S4 par le module de contrôle CTR de la figure 2. A l'issue de l'étape S4, l'objet communicant OC se met alors à l'écoute de la réception de requêtes d'appairage, via le module APP de la figure 2. Une requête d'appairage contient un identifiant du dispositif d'appairage émetteur de cette requête.

Les étapes S2 et S3 peuvent être simultanées. Par exemple, en référence à la figure 1A, dans le contexte d'utilisation d'une pompe DF₁₀ d'une station-service, de l'achat de nourriture à emporter à un guichet DF₁₁, de l'utilisation d'un parcmètre DF₁₂, il est nécessaire que la voiture OC₁ soit à l'arrêt (vitesse nulle) au niveau de la pompe DF₁₀, du guichet DF₁₁ ou du parcmètre DF₁₂. De manière similaire, en référence à la figure 1C, dans le cas de l'accès à un moyen de transport via le portillon DF₃₀, il est nécessaire que l'utilisateur UT marque un temps d'arrêt avant le passage du portillon DF₃₀, signifiant que la vitesse de la montre connectée OC₃ est nulle à ce moment précis. Ainsi dans la mesure où parmi les informations de contexte ICU déterminées en S1, figure, dans le cas de la figure 1A, une information de localisation de la voiture OC₁ à proximité radio de la pompe DF₁₀, du guichet DF₁₁ ou du parcmètre DF₁₂ ou, dans le cas de la figure 1C, une information de localisation de la montre connectée OC₃ à proximité radio du portillon DF₃₀, les conditions sont considérées remplies pour passer à l'étape S4 précitée. Quel que soit le contexte d'utilisation envisagé ou le type d'objet communicant OC, de telles informations de localisation peuvent faire partie des informations de contexte d'utilisation ICU déterminées en S1. Dans le cas de la figure 1A, s'agissant par exemple de la voiture OC₁ qui se trouve à la pompe DF₁₀ ou au niveau du guichet DF₁₁, un marquage au sol particulier de la zone Z pourrait être détecté par la voiture OC₁, générant de ce fait une information de localisation de la voiture OC₁ à proximité de la pompe DF₁₀ ou du guichet DF₁₁.

En S5, l'objet communicant OC reçoit une requête d'appairage REQ APP_{c} en provenance d'au moins un dispositif d'appairage DA_{c}, avec 1≤c≤R. Une telle requête contient un identifiant ID_{c} du dispositif d'appairage DA_{c}.

En S6, l'objet communicant OC identifie le dispositif d'appairage DA_{c} grâce à l'identifiant ID_{c} contenu dans la requête REQ APP_{c}. Au cours de cette étape, l'objet communicant OC exploite aussi la clé de chiffrement associée à l'identifiant ID_{c} dans la table TAB de la figure 2 ou directement dans la requête REQ APP_{c} si cette clé est contenue dans cette dernière.

En S7, l'objet communicant OC compare l'identifiant ID_{c} à l'identifiant d'au moins un dispositif d'appairage qui a été obtenu en S2. Si l'identifiant ID_{c} ne correspond à aucun identifiant obtenu en S2 (N sur la figure 4) et/ou si l'objet communicant OC ne parvient pas à authentifier la requête REQ APP_{c} à l'aide de la clé de chiffrement, le procédé de communication sans contact est stoppé ou bien l'objet communicant OC réitère les étapes S5 à S7, ce qui constitue un deuxième niveau de sécurité du procédé de communication sans contact de l'objet communicant OC avec un dispositif de communication DCⱼ, empêchant ainsi l'objet communicant OC de s'appairer à mauvais escient ou de manière frauduleuse avec un tel dispositif de communication. Le procédé de communication sans contact est par exemple stoppé lorsque le module de commande CTR de la figure 2 désactive la réception, par l'objet communicant OC, des requêtes d'appairage. Si en revanche l'identifiant ID_{c} est égal à un identifiant IDₖ obtenu en S2 (O sur la figure 4) et que l'authentification de la requête REQ APP_{c} à l'aide de la clé de chiffrement aboutit, l'objet communicant OC compare en S8 les données de localisation LOCₖ associées à l'identifiant IDₖ du dispositif d'appairage DAₖ aux données de localisation LOCo de l'objet communicant OC qui sont issues d'un des capteurs CAP₁, CAP₂, ..., CAPₛ. Si les données de localisation LOCₖ et LOCo ne correspondent pas (N sur la figure 4), l'objet communicant OC n'est pas considéré en situation d'appairage valide. Le procédé de communication sans contact est donc stoppé ou bien l'objet communicant OC réitère les étapes S5 à S8, ce qui constitue un troisième niveau de sécurité du procédé de communication sans contact de l'objet communicant OC avec un dispositif de communication DCⱼ, empêchant ainsi l'objet communicant OC de s'appairer à mauvais escient ou de manière frauduleuse avec un tel dispositif de communication. Si les données de localisation LOCₖ et LOCo correspondent (O sur la figure 4), l'objet communicant OC s'appaire alors en S9 avec le dispositif de communication DCⱼ, via le dispositif d'appairage DAₖ qui lui est associé.

La comparaison S8 entre les données de localisation LOCₖ associées à l'identifiant IDₖ du dispositif d'appairage DAₖ et les données de localisation LOCo de l'objet communicant OC peut prendre différentes formes selon la nature des données de localisation. Selon un exemple :
- les données de localisation LOCo de l'objet communicant comprennent les coordonnées d'un point caractéristique de l'objet, par exemple son centre géométrique,
- les données de localisation LOCₖ comprennent les coordonnées définissant le périmètre de la zone Z.

Dans ce cas, la comparaison S8 vérifie si ce point caractéristique est inclus ou non dans la zone définie par les données de localisation LOCₖ.

Selon un autre exemple :
- les données de localisation LOCo de l'objet communicant comprennent les coordonnées définissant le périmètre d'une zone Z' dans laquelle est situé l'objet communicant OC,
- les données de localisation LOCₖ comprennent les coordonnées définissant le périmètre de la zone Z.

Dans ce cas, la comparaison S8 vérifie :
- si la zone Z' est incluse ou pas dans la zone Z, ou bien l'inverse,
- si les zones Z' et Z se chevauchent ou pas,
- si les zones Z' et Z sont juxtaposées ou pas,
- etc...

Une fois l'appairage effectué en S9, une communication sans contact S10 est alors mise en œuvre de manière classique entre l'objet communicant OC et le dispositif de communication DCⱼ, pour la mise en œuvre d'une transaction (paiement, contrôle d'accès, etc.) relative à la fourniture d'un produit ou d'un service.

Les étapes du procédé de communication sans contact qui viennent d'être décrites ci-dessus permettent avantageusement à tout objet connecté de communiquer sans contact, de façon complètement autonome et sécurisée, avec un dispositif de communication (serveur de paiement, serveur ou portillon de contrôle d'accès, caisse d'une boutique, d'un guichet ou d'un péage, etc...), que ce dispositif de communication soit à proximité ou distant de l'objet connecté.

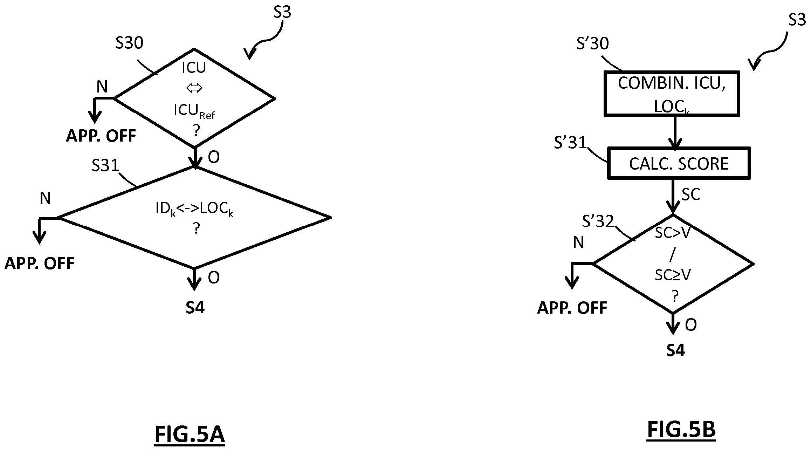

On va maintenant décrire, en référence à la figure 5A, un premier mode de réalisation d'une phase décisionnelle mise en œuvre au cours de l'étape S3 de la figure 4 pour caractériser que les informations de contexte d'utilisation ICU déterminées en S2 sont bien représentatives d'une situation d'appairage potentielle légitime de l'objet communicant OC.

Une telle phase comprend une étape S30 au cours de laquelle les informations de contexte d'utilisation ICU sont comparées à des informations de contexte d'utilisation de référence ICU_{Ref}, lesquelles caractérisent une situation d'appairage d'un objet communicant comme étant valide et qui a été apprise au préalable, par exemple à l'aide d'un réseau de neurones.

Si les informations de contexte d'utilisation ICU et les informations de contexte d'utilisation de référence ICU_{Ref} ne concordent pas (N sur la figure 5A), l'étape S4 d'activation de réception des requêtes d'appairage n'est pas déclenchée.

Si les informations de contexte d'utilisation ICU et les informations de contexte d'utilisation de référence ICU_{Ref} concordent (O sur la figure 5A), il est vérifié en S31 si une zone Z associée à un dispositif d'appairage DAₖ a bien été localisée par l'objet communicant OC, soit dynamiquement à l'aide d'un/de message(s) de diffusion précité, soit à l'aide des informations stockées dans la table de correspondance TAB de la figure 2. Si tel est le cas, l'étape S4 d'activation de réception des requêtes d'appairage est déclenchée. Sinon, cette étape S4 n'est pas déclenchée.

Dans le contexte d'utilisation des figures 1A et 3, où l'objet communicant OC est une voiture OC₁ qui, par exemple, vient faire le plein à la pompe DF₁₀, les informations de contexte d'utilisation ICU déterminées sont par exemple :
- la vitesse de la voiture OC₁ est nulle,
- le moteur de la voiture OC₁ est coupé,
- le niveau du réservoir est bas,
- la catégorie « pompe à essence » est identifiée dans un message MSG.

Ces informations sont comparées à une situation d'apprentissage qui a été modélisée avec des informations de contexte d'utilisation de référence ICU_{Ref} du même type ou d'un type similaire aux informations de contexte d'utilisation ICU et qui a déjà été évaluée au préalable dans un contexte d'utilisation identique ou similaire:
- pour la voiture OC₁, ou
- pour une autre voiture ou tout autre type de véhicule appartenant par exemple à une flotte de véhicules à laquelle appartient la voiture OC₁.

Ainsi, si en S30, toutes les informations de contexte d'utilisation ICU concordent avec les informations de contexte d'utilisation de référence ICU_{Ref}, il est vérifié en S31 si la voiture OC₁ a bien obtenu au préalable en S2 (figure 4) dans la table TAB ou dans un message MSG les données de localisation LOC₁₀ de la zone Z associée au dispositif d'appairage D₁₀. Si tel est le cas, l'étape S4 d'activation de réception des requêtes d'appairage est déclenchée. Sinon, cette étape S4 n'est pas déclenchée.

Si par contre les informations de contexte d'utilisation ICU déterminées sont par exemple :
- la vitesse de la voiture OC₁ est nulle,
- le moteur de la voiture OC₁ est coupé,
- le niveau du réservoir est bas,
- la catégorie « fast-food » est identifiée dans un message MSG,
alors, dans l'étape de comparaison S30, ces informations de contexte d'utilisation ICU ne seront pas cohérentes avec les informations de contexte d'utilisation de référence ICU_{Ref} modélisant une situation connue ou apprise dans laquelle se trouve la voiture OC₁. L'étape S4 d'activation de réception des requêtes d'appairage ne sera donc pas déclenchée.

Dans le contexte d'utilisation de la figure 1B, où l'objet communicant OC est un smartphone OC₂, les informations de contexte d'utilisation ICU déterminées sont par exemple :
- le type de l'objet OBJ scanné, et/ou
- l'enseigne de la boutique qui vend l'objet OBJ, et/ou
- des informations de suivi de la géolocalisation du smartphone OC₂ dans la boutique qui indiquent que le smartphone OC₂ est présent dans la zone Z associée au dispositif d'appairage DA₂₀, et/ou
- des données de l'historique de navigation du smartphone OC₂ montrant que l'utilisateur UT a cherché à obtenir des informations sur l'objet OBJ,
- etc.

Cette ou ces information(s) est/sont comparée(s) à une situation d'apprentissage qui a été modélisée avec une ou des informations de contexte d'utilisation de référence ICU_{Ref} du même type ou d'un type similaire aux informations de contexte d'utilisation ICU et qui a déjà été évaluée au préalable dans un contexte d'utilisation identique ou similaire qui définit les habitudes d'achat de l'utilisateur UT ou d'un autre utilisateur ou encore une cinématique d'achat connue de l'utilisateur UT ou d'un autre utilisateur.

Dans le contexte d'utilisation de la figure 1C, où l'objet communicant OC est une montre connectée OC₃, les informations de contexte d'utilisation ICU déterminées sont par exemple :
- le nom de l'arrêt de bus,
- des données de géolocalisation de la montre connectée par rapport à cet arrêt,
- l'identifiant de la ligne qui est indiqué par exemple sur le bus qui s'approche,
- une vitesse de la montre connectée qui décroit,
- etc.

Ces informations sont comparées à une situation d'apprentissage qui a été modélisée avec des informations de contexte d'utilisation de référence ICU_{Ref} du même type ou d'un type similaire aux informations de contexte d'utilisation ICU et qui a déjà été évaluée au préalable dans un contexte d'utilisation d'un moyen de transport identique ou similaire et représentatif des habitudes de déplacement en transport en commun de l'utilisateur UT ou d'un autre utilisateur.

On va maintenant décrire, en référence à la figure 5B, un deuxième mode de réalisation d'une phase décisionnelle mise en œuvre au cours de l'étape S3 de la figure 4 pour caractériser que les informations de contexte d'utilisation ICU déterminées en S2 sont bien représentatives d'une situation d'appairage potentielle légitime de l'objet communicant OC.

Une telle phase comprend une étape S'30 au cours de laquelle la ou les informations de contexte d'utilisation ICU sont combinées avec les données de localisation LOCₖ d'une zone Z associée au dispositif d'appairage DAₖ, ces données de localisation LOCₖ ayant été obtenues en S2 sur la figure 4.

En S'31, un score SC est calculé relativement à cette combinaison.

En S'32, le score SC est comparé à un seuil TH.

Selon un mode de réalisation, 0≤TH≤1. D'autres valeurs d'encadrement sont bien entendu possibles en fonction de l'implémentation du moteur de règles mettant en œuvre la phase de décision, via par exemple un système expert. Une convention établit par exemple qu'au-delà d'une certaine valeur de référence V du seuil TH, par exemple égale à 0,6, l'objet communicant OC se trouve dans une situation d'appairage valide. Si SC>V (ou SC≥V selon la convention établie), l'étape S4 d'activation de réception des requêtes d'appairage est déclenchée. Si SC≤V (ou SC<V selon la convention établie), l'étape S4 d'activation de réception des requêtes d'appairage n'est pas déclenchée.

## Revendications

1. Procédé de communication sans contact entre un objet communicant (OC) et un dispositif de communication (DCⱼ) pour la mise en œuvre d'une transaction, **caractérisé en ce que** le procédé comprend, au niveau de l'objet communicant situé dans une zone (Z) où ladite transaction est mise en œuvre, une exécution de manière autonome de ce qui suit :
- recevoir (S5) au moins une requête d'appairage en provenance d'un ou de plusieurs dispositifs d'appairage (DAₖ) associés à ladite zone, quand l'objet communicant a déterminé (S3) au moins une information de contexte d'utilisation de l'objet communicant ainsi qu'une localisation (LOCₖ) associée à au moins un des dispositifs d'appairage (DAₖ),
- quand un dispositif d'appairage (DA_{c}) identifié (S6) dans ladite au moins une requête d'appairage reçue correspond (S7) audit au moins un dispositif d'appairage (DAₖ) associé à ladite zone et que la localisation (LOCₖ) associée audit au moins un dispositif d'appairage (DAₖ) correspond à la localisation de l'objet communicant (OC) dans ladite zone, s'appairer (S9) avec le dispositif de communication (DCⱼ), ledit dispositif de communication étant associé au dispositif d'appairage (DA_{c}) identifié.

2. Procédé de communication sans contact selon la revendication 1, dans lequel une activation (S4) de la réception d'au moins une requête d'appairage est mise en œuvre conformément à ce qui suit :
- comparer (S30, S31) un premier ensemble d'informations incluant ladite au moins une information de contexte d'utilisation (ICU) de l'objet communicant et des données relatives à ladite localisation qui a été associée audit au moins un dispositif d'appairage à au moins un deuxième ensemble d'informations de référence (ICU_{Ref}) qui caractérise une situation d'appairage d'un objet communicant comme étant valide,
- à l'issue de ladite comparaison, établir qu'une concordance existe entre le premier ensemble d'informations et le deuxième ensemble d'informations.

3. Procédé de communication sans contact selon la revendication 1, dans lequel une activation de la réception d'au moins une requête d'appairage est mise en œuvre conformément à ce qui suit :
- combiner (S'30) ladite au moins une information de contexte d'utilisation (ICU) de l'objet communicant et des données (LOCₖ) relatives à ladite localisation associée audit au moins un dispositif d'appairage,
- obtenir (S'31) un score représentatif du résultat de la combinaison,
- comparer (S'32) le score obtenu à un seuil,
- en fonction du résultat de la comparaison, activer la réception d'au moins une requête d'appairage.

4. Procédé de communication sans contact selon l'une quelconque des revendications 1 à 3, dans lequel la au moins une information de contexte d'utilisation de l'objet communicant est représentative d'un environnement dans lequel se trouve l'objet communicant ou contient au moins une donnée de fonctionnement de l'objet communicant.

5. Procédé de communication sans contact selon la revendication 4, dans lequel la au moins une information de contexte d'utilisation représentative d'un environnement dans lequel se trouve l'objet communicant est contenue dans un message reçu par l'objet communicant en provenance d'un dispositif d'appairage associé à ladite zone ou d'un dispositif d'émission de message situé dans ledit environnement, ladite au moins une information indiquant un lieu à proximité de l'objet communicant.

6. Procédé de communication sans contact selon la revendication 4, dans lequel la au moins une information de contexte d'utilisation représentative d'un environnement dans lequel se trouve l'objet communicant comprend une donnée de géolocalisation de l'objet communicant par rapport au dispositif d'appairage associé à ladite zone.

7. Procédé de communication sans contact selon la revendication 4, dans lequel la au moins une information de contexte d'utilisation représentative d'un environnement dans lequel se trouve l'objet communicant contient une donnée issue d'au moins un capteur appartenant à l'objet communicant.

8. Procédé de communication sans contact selon la revendication 4, dans lequel la au moins une donnée de fonctionnement de l'objet communicant contenue dans la au moins une information de contexte d'utilisation est un paramètre de fonctionnement courant relevé par l'objet communicant ou un élément d'un historique des communications ou des transactions effectuées par l'objet communicant.

9. Procédé de communication sans contact selon la revendication 1, dans lequel la localisation du dispositif d'appairage identifié est déterminée à partir d'une mémoire de l'objet communicant.

10. Procédé de communication sans contact selon la revendication 1, dans lequel la localisation associée audit au moins un dispositif d'appairage est déterminée à partir du contenu d'un message reçu en provenance dudit au moins un dispositif d'appairage ou d'un dispositif d'émission de messages situé dans l'environnement de l'objet communicant.

11. Objet communicant (OC) ayant des capacités de communication sans contact avec un dispositif de communication (DCⱼ), pour la mise en œuvre d'une transaction, **caractérisé en ce que** ledit objet communicant comprend un processeur (PROC) qui est configuré pour mettre en œuvre, au niveau de l'objet communicant situé dans une zone (Z) où ladite transaction est mise en œuvre, une exécution de manière autonome de ce qui suit :
- recevoir au moins une requête d'appairage en provenance d'un ou de plusieurs dispositifs d'appairage associés à ladite zone, quand l'objet communicant a déterminé au moins une information de contexte d'utilisation de l'objet communicant ainsi qu'une localisation associée à au moins un des dispositifs d'appairage (DAₖ),
- quand un dispositif d'appairage (DA_{c}) identifié dans ladite au moins une requête d'appairage reçue correspond audit au moins un dispositif d'appairage (DAₖ) associé à ladite zone et que la localisation (LOCₖ) associée audit au moins un dispositif d'appairage (DAₖ) correspond à la localisation de l'objet communicant (OC) dans ladite zone, s'appairer avec le dispositif de communication (DCⱼ), ledit dispositif de communication étant associé au dispositif d'appairage (DA_{c}) identifié.

12. Programme d'ordinateur comportant des instructions de code de programme pour la mise en œuvre du procédé de communication sans contact selon l'une quelconque des revendications 1 à 10, lorsqu'il est exécuté sur un ordinateur.

13. Support d'informations lisible par un ordinateur, et comportant des instructions d'un programme d'ordinateur selon la revendication 12.

14. Système de communication sans contact, **caractérisé en ce qu'**il comprend :
- un objet communicant (OC) selon la revendication 11,
- un dispositif de communication (DCⱼ) associé à un dispositif d'appairage (DAₖ) qui est lui-même associé à la zone (Z) où la transaction est mise en œuvre.

## Patentansprüche

1. Verfahren zur kontaktlosen Kommunikation zwischen einem kommunizierenden Objekt (OC) und einer Kommunikationsvorrichtung (DCⱼ) zur Implementierung einer Transaktion, **dadurch gekennzeichnet, dass** das Verfahren an dem kommunizierenden Objekt, das sich in einem Bereich (Z) befindet, in dem die Transaktion implementiert wird, das autonome Ausführen von Folgendem beinhaltet:
- Empfangen (S5) mindestens einer Paarungsanfrage von einer oder mehreren mit dem Bereich assoziierten Paarungsvorrichtungen (DAₖ), wenn das kommunizierende Objekt mindestens eine Nutzungskontextinformation des kommunizierenden Objekts sowie einen mit mindestens einer der Paarungsvorrichtungen (DAₖ) assoziierten Standort (LOCₖ) bestimmt hat (S3),
- wenn eine in der mindestens einen empfangenen Paarungsanfrage identifizierte (S6) Paarungsvorrichtung (DA_{c}) der mindestens einen mit dem Bereich assoziierten Paarungsvorrichtung (DAₖ) entspricht (S7) und der mit der mindestens einen Paarungsvorrichtung (DAₖ) assoziierte Standort (LOCₖ) dem Standort des kommunizierenden Objekts (OC) in dem Bereich entspricht, Ausführen einer Paarung (S9) mit der Kommunikationsvorrichtung (DCⱼ), wobei die Kommunikationsvorrichtung mit der identifizierten Paarungsvorrichtung (DA_{c}) assoziiert ist.

2. Kontaktloses Kommunikationsverfahren nach Anspruch 1, wobei ein Aktivieren (S4) des Empfangens mindestens einer Paarungsanfrage folgendermaßen implementiert wird:
- Vergleichen (S30, S31) eines ersten Satzes Informationen, der die mindestens eine Nutzungskontextinformation (ICU) des kommunizierenden Objekts und Daten über den mit der mindestens einen Paarungsvorrichtung assoziierten Standort umfasst, mit mindestens einem zweiten Satz Referenzinformationen (ICU_{Ref}), der eine Paarungssituation eines kommunizierenden Objekts als gültig kennzeichnet,
- im Anschluss an den Vergleich, Feststellen, dass zwischen dem ersten Satz Informationen und dem zweiten Satz Informationen eine Übereinstimmung besteht.

3. Kontaktloses Kommunikationsverfahren nach Anspruch 1, wobei ein Aktivieren des Empfangens mindestens einer Paarungsanfrage folgendermaßen implementiert wird:
- Verknüpfen (S'30) der mindestens einen Nutzungskontextinformation (ICU) des kommunizierenden Objekts mit Daten (LOCₖ) über den mit der mindestens einen Paarungsvorrichtung assoziierten Standort,
- Erhalten (S'31) eines Scores, der für das Ergebnis der Verknüpfung repräsentativ ist,
- Vergleichen (S'32) des erhaltenen Scores mit einem Schwellenwert,
- in Abhängigkeit von dem Ergebnis des Vergleichs, Aktivieren des Empfangens mindestens einer Paarungsanfrage.

4. Kontaktloses Kommunikationsverfahren nach einem der Ansprüche 1 bis 3, wobei die mindestens eine Nutzungskontextinformation des kommunizierenden Objekts für eine Umgebung repräsentativ ist, in der sich das kommunizierende Objekt befindet, oder mindestens ein Betriebsdatenelement des kommunizierenden Objekts enthält.

5. Kontaktloses Kommunikationsverfahren nach Anspruch 4, wobei die mindestens eine Nutzungskontextinformation, die für eine Umgebung, in der sich das kommunizierende Objekt befindet, repräsentativ ist, in einer Nachricht enthalten ist, die durch das kommunizierende Objekt von einer mit dem Bereich assoziierten Paarungsvorrichtung oder von einer Nachrichtensendevorrichtung, die sich in der Umgebung befindet, empfangen wird, wobei die mindestens eine Information einen Ort in der Nähe des kommunizierenden Objekts angibt.

6. Kontaktloses Kommunikationsverfahren nach Anspruch 4, wobei die mindestens eine Nutzungskontextinformation, die für eine Umgebung, in der sich das kommunizierende Objekt befindet, repräsentativ ist, ein Geolokalisierungsdatenelement des kommunizierenden Objekts in Bezug auf die mit dem Bereich assoziierte Paarungsvorrichtung beinhaltet.

7. Kontaktloses Kommunikationsverfahren nach Anspruch 4, wobei die mindestens eine Nutzungskontextinformation, die für eine Umgebung, in der sich das kommunizierende Objekt befindet, repräsentativ ist, ein Datenelement enthält, das von mindestens einem zu dem kommunizierenden Objekt gehörenden Sensor stammt.

8. Kontaktloses Kommunikationsverfahren nach Anspruch 4, wobei das mindestens eine Betriebsdatenelement des kommunizierenden Objekts, das in der mindestens einen Nutzungskontextinformation enthalten ist, ein durch das kommunizierende Objekt erfasster aktueller Betriebsparameter oder ein Element eines Verlaufs der durch das kommunizierende Objekt vorgenommenen Kommunikationen oder Transaktionen ist.

9. Kontaktloses Kommunikationsverfahren nach Anspruch 1, wobei der Standort der identifizierten Paarungsvorrichtung anhand eines Speichers des kommunizierenden Objekts bestimmt wird.

10. Kontaktloses Kommunikationsverfahren nach Anspruch 1, wobei der mit der mindestens einen Paarungsvorrichtung assoziierte Standort anhand des Inhalts einer Nachricht bestimmt wird, die von der mindestens einen Paarungsvorrichtung oder von einer Nachrichtensendevorrichtung, die sich in der Umgebung des kommunizierenden Objekts befindet, empfangen wird.

11. Kommunizierendes Objekt (OC), das Fähigkeiten zur kontaktlosen Kommunikation mit einer Kommunikationsvorrichtung (DCⱼ) aufweist, um eine Transaktion zu implementieren, **dadurch gekennzeichnet, dass** das kommunizierende Objekt einen Prozessor (PROC) beinhaltet, der dazu konfiguriert ist, an dem kommunizierenden Objekt, das sich in einem Bereich (Z), in dem die Transaktion implementiert wird, befindet, das autonome Ausführen von Folgendem zu implementieren:
- Empfangen mindestens einer Paarungsanfrage von einer oder mehreren mit dem Bereich assoziierten Paarungsvorrichtungen, wenn das kommunizierende Objekt mindestens eine Nutzungskontextinformation des kommunizierenden Objekts sowie einen mit mindestens einer der Paarungsvorrichtungen (DAₖ) assoziierten Standort bestimmt hat,
- wenn eine in der mindestens einen empfangenen Paarungsanfrage identifizierte Paarungsvorrichtung (DA_{c}) der mindestens einen mit dem Bereich assoziierten Paarungsvorrichtung (DAₖ) entspricht und der mit der mindestens einen Paarungsvorrichtung (DAₖ) assoziierte Standort (LOCₖ) dem Standort des kommunizierenden Objekts (OC) in dem Bereich entspricht, Ausführen einer Paarung mit der Kommunikationsvorrichtung (DCⱼ), wobei die Kommunikationsvorrichtung mit der identifizierten Paarungsvorrichtung (DA_{c}) assoziiert ist.

12. Computerprogramm, das Programmcodeanweisungen umfasst, die bei seiner Ausführung auf einem Computer das kontaktlose Kommunikationsverfahren nach einem der Ansprüche 1 bis 10 implementieren.

13. Datenträger, der von einem Computer gelesen werden kann und Anweisungen eines Computerprogramms nach Anspruch 12 umfasst.

14. Kontaktloses Kommunikationssystem, **dadurch gekennzeichnet, dass** es Folgendes beinhaltet:
- ein kommunizierendes Objekt (OC) nach Anspruch 11,
- eine Kommunikationsvorrichtung (DCⱼ), die mit einer Paarungsvorrichtung (DAₖ) assoziiert ist, die wiederum mit dem Bereich (Z), in dem die Transaktion implementiert wird, assoziiert ist.

## Claims

1. Method for contactless communication between a communicating object (OC) and a communication device (DCⱼ) in order to implement a transaction, **characterized in that** the method comprises, on the communicating object located in an area (Z) in which said transaction is implemented, autonomous execution of the following:
- receiving (S5) at least one pairing request from one or more pairing devices (DAₖ) associated with said area, when the communicating object has determined (S3) at least one item of information in relation to the use context of the communicating object and a location (LOCₖ) associated with at least one of the pairing devices (DAₖ),
- when a pairing device (DA_{c}) identified (S6) in said at least one received pairing request corresponds (S7) to said at least one pairing device (DAₖ) associated with said area and the location (LOCₖ) associated with said at least one pairing device (DAₖ) corresponds to the location of the communicating object (OC) in said area, pairing (S9) with the communication device (DCⱼ), said communication device being associated with the identified pairing device (DA_{c}).

2. Contactless communication method according to Claim 1, wherein activation (S4) of the reception of at least one pairing request is implemented as follows:
- comparing (S30, S31) a first set of information, including said at least one item of information (ICU) in relation to the use context of the communicating object and data in relation to said location that has been associated with said at least one pairing device, with at least one second set of reference information (ICU_{Ref}) that characterizes a pairing situation of a communicating object as being valid,
- at the end of said comparison, establishing that there is a match between the first set of information and the second set of information.

3. Contactless communication method according to Claim 1, wherein activation of the reception of at least one pairing request is implemented as follows:
- combining (S'30) said at least one item of information (ICU) in relation to the use context of the communicating object and data (LOCₖ) in relation to said location associated with said at least one pairing device,
- obtaining (S'31) a score representative of the result of the combination,
- comparing (S'32) the obtained score with a threshold,
- depending on the result of the comparison, activating the reception of at least one pairing request.

4. Contactless communication method according to any one of Claims 1 to 3, wherein the at least one item of information in relation to the use context of the communicating object is representative of an environment in which the communicating object is located or contains at least one operating datum in relation to the communicating object.

5. Contactless communication method according to Claim 4, wherein the at least one item of use context information representative of an environment in which the communicating object is located is contained in a message received by the communicating object from a pairing device associated with said area or from a message-transmitting device located in said environment, said at least one item of information indicating a location close to the communicating object.

6. Contactless communication method according to Claim 4, wherein the at least one item of use context information representative of an environment in which the communicating object is located comprises a geolocation datum in relation to the communicating object with respect to the pairing device associated with said area.

7. Contactless communication method according to Claim 4, wherein the at least one item of use context information representative of an environment in which the communicating object is located contains a datum coming from at least one sensor belonging to the communicating object.

8. Contactless communication method according to Claim 4, wherein the at least one operating datum in relation to the communicating object contained in the at least one item of use context information is a current operating parameter recorded by the communicating object or an element of a history of the communications or transactions carried out by the communicating object.

9. Contactless communication method according to Claim 1, wherein the location of the identified pairing device is determined from a memory of the communicating object.

10. Contactless communication method according to Claim 1, wherein the location associated with said at least one pairing device is determined from the content of a message received from said at least one pairing device or from a message-transmitting device located in the environment of the communicating object.

11. Communicating object (OC) having capabilities for contactless communication with a communication device (DCⱼ), in order to implement a transaction, **characterized in that** said communicating object comprises a processor (PROC) that is configured to implement, on the communicating object located in an area (Z) in which said transaction is implemented, autonomous execution of the following:
- receiving at least one pairing request from one or more pairing devices associated with said area, when the communicating object has determined at least one item of information in relation to the use context of the communicating object and a location associated with at least one of the pairing devices (DAₖ),
- when a pairing device (DA_{c}) identified in said at least one received pairing request corresponds to said at least one pairing device (DAₖ) associated with said area and the location (LOCₖ) associated with said at least one pairing device (DAₖ) corresponds to the location of the communicating object (OC) in said area, pairing with the communication device (DCⱼ), said communication device being associated with the identified pairing device (DA_{c}).

12. Computer program comprising program code instructions for implementing the contactless communication method according to any one of Claims 1 to 10 when it is executed on a computer.

13. Computer-readable information medium comprising instructions of a computer program according to Claim 12.

14. Contactless communication system, **characterized in that** it comprises:
- a communicating object (OC) according to Claim 11,
- a communication device (DCⱼ) associated with a pairing device (DAₖ) that is itself associated with the area (Z) in which the transaction is implemented.
